(19) Europäisches Patentamt
European Patent Office
Office européen des brevets

(11) Veröffentlichungsnummer : **0 051 577**
**B1**

(12) # EUROPÄISCHE PATENTSCHRIFT

(45) Veröffentlichungstag der Patentschrift :
**19.12.84**

(51) Int. Cl.³ : **B 23 P 15/14**, F 23 Q 2/46,
**B 23 D 73/06**

(21) Anmeldenummer : **81890141.5**

(22) Anmeldetag : **17.08.81**

(54) Verfahren zum Herstellen von Reibrädern von Pyrophorfeuerzeugen.

(30) Priorität : **31.10.80 AT 5367/80**

(43) Veröffentlichungstag der Anmeldung :
**12.05.82 Patentblatt 82/19**

(45) Bekanntmachung des Hinweises auf die Patenterteilung : **19.12.84 Patentblatt 84/51**

(84) Benannte Vertragsstaaten :
**DE FR GB IT NL**

(56) Entgegenhaltungen :
**DE-A- 2 432 085**
**DE-A- 2 711 074**
**DE-A- 2 711 705**
**DE-C-    81 685**
**DE-C-   277 413**
**DE-C- 1 128 385**
**US-A- 3 314 134**

(73) Patentinhaber : **Racek, Alfred**
**Seitenberggasse 54**
**A-1160 Wien (AT)**

(72) Erfinder : **Racek, Alfred**
**Seitenberggasse 54**
**A-1160 Wien (AT)**

(74) Vertreter : **Rippel, Andreas, Dipl.-Ing.**
**Maxingstrasse 34**
**A-1130 Wien (AT)**

Jouve, 18, rue St-Denis, 75001 Paris, France

EP 0 051 577 B1

**Beschreibung**

Die Erfindung bezieht sich auf ein Verfahren zum Herstellen von Reibrädern von Pyrophorfeuerzeugen, bei dem zur Erzeugung einer verzahnten Umfangsfläche des Reibrades die Umfangsfläche durch Werkzeughiebe verformt wird.

Es sind Reibräder bekannt, die eine einfache, gerade Verzahnung mit achsparallel verlaufenden Zähnen aufweisen. Da bei diesen bekannten Reibrädern jeder Zahn über seine gesamte Breite gleichzeitig arbeitet, ergibt sich ein sehr ruckartiges Drehen des Reibrades. Der notwendige Kraftaufwand zum Drehen des Reibrades ist ungleichmäßig und ebenso ungleichmäßig ist der Funkenabrieb.

Es wurden daher schon Verfahren zur Herstellung von Reibrädern angewandt, bei denen die Umfangsfläche des Reibrades durch zwei im Winkel zueinander verlaufende Werkzeughiebe verformt wurde (US-A-33 14 134). Die Umfangsfläche wird dadurch vorerst in einer Linie und dann in einer dazu im Winkel stehenden Linie verformt, wobei an den Schnittstellen dieser linienförmigen Verformungen Spitzen entstehen, die in Achsrichtung gegeneinander versetzt sind. Bei diesen bekannten Reibrädern schneidet der Zahn nicht über seine gesamte Breite, sondern nur mit einigen Spitzen und da diese Spitzen einen seitlichen Versatz haben, wird ein gleichmäßiges Arbeiten der Reibräder erreicht. Nachteilig bei diesem bekannten Verfahren ist, daß die Beanspruchung des Reibradmaterials zufolge der zweimaligen Hiebe sehr hoch ist. Da die Hiebe überdies nicht längs einer Geraden, sondern längs einer gekrümmten Linie erfolgen müssen, ist die Anwendung dieses Verfahrens insbesondere bei kleineren Reibrädern schwierig. Diese kleineren Reibräder werden derart stark verformt, daß eine Maßhaltigkeit nicht mehr gewährleistet ist.

Bei einem weiteren gebräuchlichen Verfahren zur Erzeugung von Zahnspitzen, das insbesondere bei Reibrädern angewandt wird, die auf Drehautomaten hergestellt werden, wird auf eigenen Spezialautomaten spanlos oder spanend eine größere Anzahl dicht nebeneinander liegender drallförmiger Nuten in das Stangenmaterial eingearbeitet. Nach diesem Arbeitsgang kommen diese Stangen zum Drehvorgang. Die fertig gedrehten und mit diesen Drallzähnen versehenen Reibräder werden nun anschließend dem Behauvorgang unterzogen. Der Nachteil liegt auch hier wieder in den erforderlichen zwei getrennten Arbeitsgängen zur Herstellung der achsial versetzten Zahnspitzen.

Die Erfindung hat es sichn zum Ziel gesetzt, ein Verfahren zu schaffen, das die aufgezeigten Nachteile nicht aufweist. Erreicht wird dies in überraschend einfacher Weise dadurch, daß die Umfangsfläche an in Achsrichtung gegeneinander versetzten Stellen mit einem Werkzeug verformt wird, dessen bearbeitende Fläche einen Wellenschliff besitzt. Beim erfindungsgemäßen Verfahren wird daher das punktweise Herausragen von einzelnen Spitzen bzw. Zähnen nicht durch zwei im Winkel zueinander verlaufende linienförmige Hiebe, sondern durch lediglich punktförmige Hiebe erreicht, die das mit dem Wellenschliff versehene Werkzeug erteilt.

Zur Herstellung von Feilen und Raspeln ist es schon bekannt, ein Werkzeug zu verwenden, dessen Schneide durch Kerben unterbrochen ist, wodurch auf der Feile einzelne Erhebungen gebildet werden (DE-C-81 685). Einerseits ist jedoch eine Feile nicht ohne weiteres mit einem Reibrad vergleichbar, anderseits bringt der erfindungsgemäß verwendete Wellenschliff des Werkzeuges exaktere Erhebungen am Reibrad hervor und unterliegt auch weniger der Abnützung als ein Werkzeug mit Kerben in der Schneide.

Nach einem weiteren Merkmal dieser Erfindung ist es vorteilhaft, die Schlagrichtung schräg verlaufend in Richtung des zahnartigen Wellenschliffes erfolgen zu lassen. Dadurch ist es möglich, den Zahnrücken des Meißels in die vorher geschlagene Zahnlücke zu setzen, sodaß der vorher geschlagene Zahn nicht verletzt werden kann. Damit können nach diesem Verfahren dichtere Zahnreihen — also feinere Zahnungen — geschlagen werden als dies mit allen bisher bekannten Verfahren möglich wäre.

Nachstehend ist die Erfindung an Hand der Zeichnungen näher erläutert. Dabei zeigen:

Figur 1 in schaubildlicher Ansicht ein Werkzeug mit einer wellenartigen Zahnung,

Figur 2 einen Teil der Umfangsfläche eines mit dem Werkzeug nach Fig. 1 bearbeiteten Reibrades,

Figur 3 schematisch eine Draufsicht auf die abgewickelte Umfangsfläche des Reibrades,

Figur 4 in zwei zueinander senkrechten Ansichten ein Werkzeug, dessen Wellenschliff schräg verlaufend angeordnet ist, wobei die Schlagrichtung des Meißels in dieser schrägen Richtung erfolgt,

Figur 5 einige durch ein solches Werkzeug hergestellte Zähne und

Figur 6 in zwei zueinander senkrechten Ansichten ein Werkzeug, dessen Schneide durch zahnähnliche Einschnitte unterbrochen ist, wobei die Zähne auch schräg verlaufend sein können.

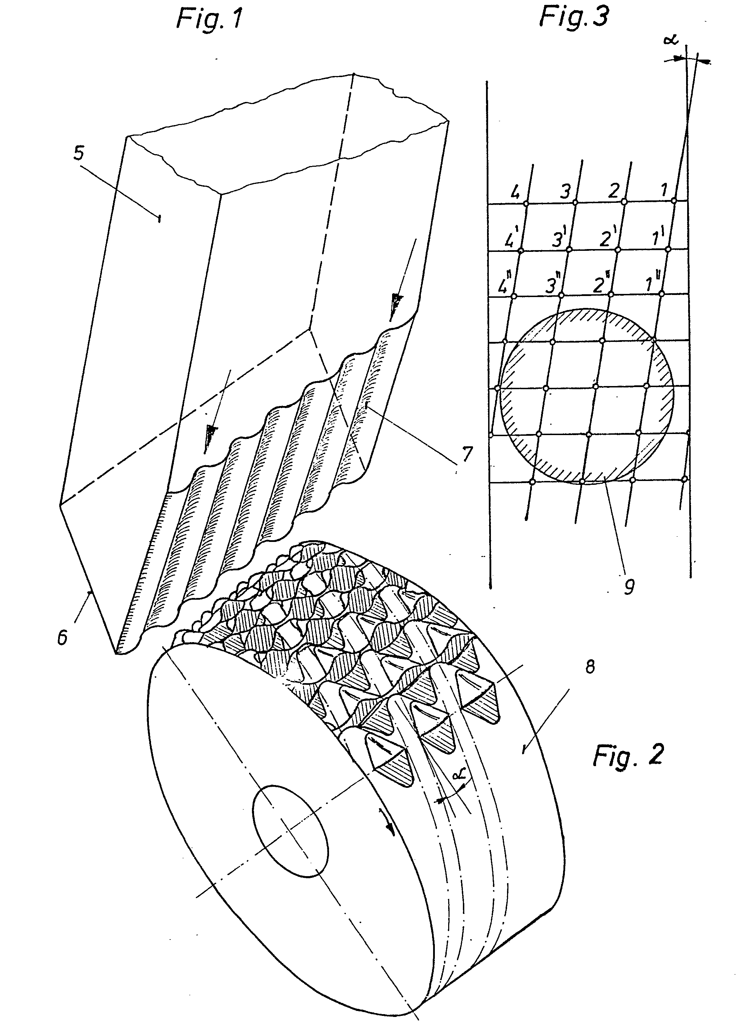

In Fig. 1 ist ein Werkzeug 5 dargestellt, dessen bearbeitende Fläche 6 eben ist und dessen Fläche 7 einen Wellenschliff besitzt. Mittels eines solchen Werkzeuges 5 wird die Umfangsfläche 8 eines Reibrades dadurch verformt, daß in Richtung zum Reibrad verlaufende Hiebe ausgeübt werden. Nach jedem Hieb wird das Reibrad oder das Werkzeug auch achsial um einen kleinen Betrag verschoben, sodaß die insbesondere in Fig. 3 ersichtlichen Verbindungslinien der einzelnen Zahnspitzen 1, 1', 1'' ..., bzw. 2, 2', 2'' usw. unter einem Winkel α gegenüber der Drehrichtung des Reibrades geneigt sind. Der in Fig. 3 mit seinem Umriß eingezeichnete Feuerstein 9 wird daher an einzelnen gegeneinander versetzten Stellen und somit gleichmäßig abgerieben.

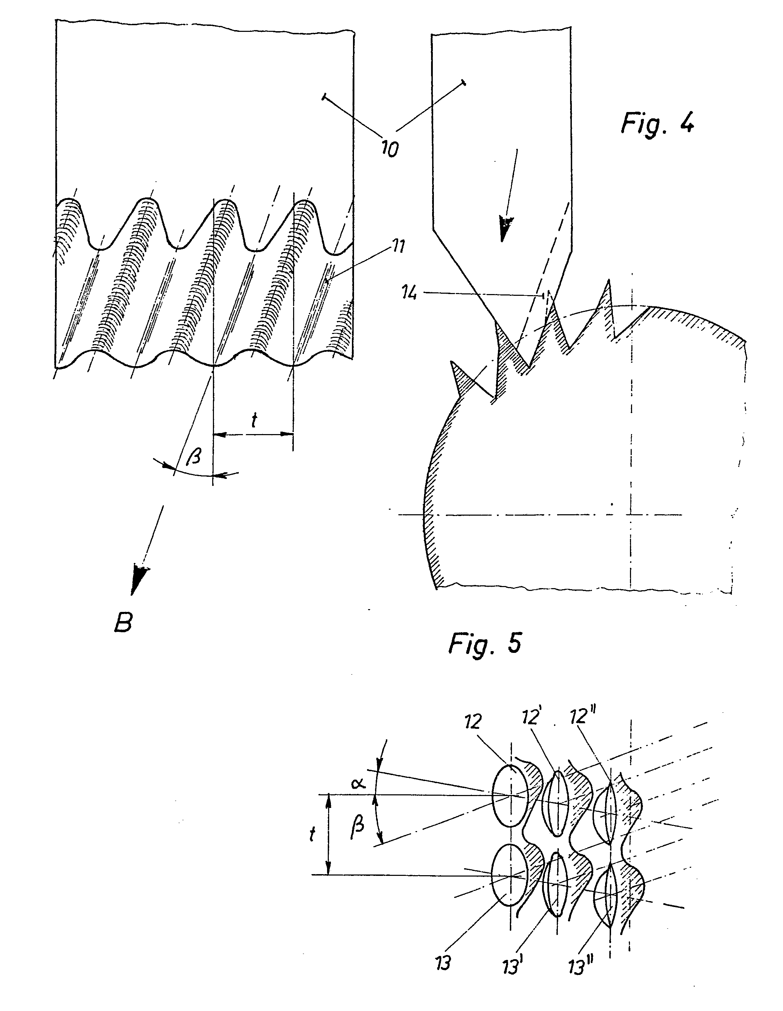

Die bearbeitende Fläche 11 des in Fig. 4 dargestellten Werkzeuges 10 besitzt einen Wellenschliff, der unter einen Winkel β schräg verlaufend angeordnet ist. Die Teilung des Wellenschliffes ist mit t bezeichnet. Die Arbeitsweise dieses Werkzeuges ist die gleiche wie zu den Fig. 1 bis 3 beschrieben.

Unterschiedlich ist jedoch, daß zufolge des schrägen Verlaufes des Wellenschliffes und der um den Winkel β verschobenen Wirkungslinie (siehe Pfeil B) des Werkzeuges die Zähne 12, 13 einer Reihe durch die Zähne 12', 13" der nächsten Reihe nicht mehr verformt werden (Fig. 5). Das beim Herstellen der Zähne 12', 13' herausgedrückte Material wird nämlich zufolge des Winkels β in den Zwischenraum zwischen den Zähnen 12, 13 gedrückt. Bei allen bisher angewendeten Verfahren würden die Zahnspitzen 14 bei so dichten Zahnreihen wieder niedergedrückt werden.

## Ansprüche

1. Verfahren zum Herstellen von Reibrädern von Pyrophorfeuerzeugen, bei dem zur Erzeugung einer verzahnten Umfangsfläche (8) des Reibrades die Umfangsfläche durch Werkzeughiebe verformt wird, dadurch gekennzeichnet, daß die Umfangsfläche (8) an in Achsrichtung gegeneinander versetzten Stellen mit einem Werkzeug (5, 10) verformt wird, dessen bearbeitende Fläche (7, 11) einen Wellenschliff besitzt.

2. Verfahren nach Anspruch 1, dadurch gekennzeichnet, daß die Schlagrichtung (B) schräg verlaufend in Richtung des zahnartigen Wellenschliffes (11) erfolgt.

## Claims

1. A method for manufacturing a spark wheel for a pyrophoric lighter, wherein for producing a serrated circumferential surface (8) of said spark wheel the circumferential surface is deformed by tool-cuttings, characterized in that said circumferential surface (8) is deformed by a tool (5, 10) at locations which are mutually offset with respect to the axial direction, said tool having a corrugation-ground working surface (7, 12).

2. The method according to claim 1, characterized in that the cutting direction (B) takes place obliquely in the direction of said serrated corrugation grinding (11).

## Revendications

1. Le procédé pour la fabrication des roues de friction des briquets pyrophoriques, au cours duquel la surface périphérique de la roue de friction est déformée à l'aide de coups avec un outil afin d'atteindre une surface périphérique dentée (8), est caractérisé par le fait que la surface périphérique (8) est déformée à des endroits décalés les uns par rapport aux autres en direction de l'axe avec un outil (5, 10) dont la surface de travail (7, 11) possède une taille ondulée.

2. Le procédé suivant revendication 1 est caractérisé par le fait que la direction des coups (B) est effectuée obliquement en direction de la taille ondulée comme des dents (11).

Fig. 1

Fig. 3

Fig. 2

Fig. 4

Fig. 5